Europäisches Patentamt

European Patent Office

Office européen des brevets

(11) Publication number : **0 515 956 A1**

(12) # EUROPEAN PATENT APPLICATION

(21) Application number : **92108450.5**

(22) Date of filing : **19.05.92**

(51) Int. Cl.⁵ : **G06F 7/72**

(30) Priority : **27.05.91 EP 91401391**

(43) Date of publication of application :
**02.12.92 Bulletin 92/49**

(84) Designated Contracting States :
**PT**

(71) Applicant : **THOMSON CONSUMER ELECTRONICS S.A.**
**9, Place des Vosges, La Défense 5**
**F-92400 Courbevoie (FR)**

(72) Inventor : **Naccache, David**
**94B rue du 11 Novembre 1918**
**F-94700 Maisons-Alfort (FR)**

(74) Representative : **Einsel, Robert, Dipl.-Ing.**
**Deutsche Thomson-Brandt GmbH Patent- und**
**Lizenzabteilung Göttinger Chaussee 76**
**W-3000 Hannover 91 (DE)**

(54) **Apparatus and method for modulo computation.**

(57) Fast modulo computation with reduced RAM size.

Modern cryptographical communications often require modulo operations. A method of computing Y modulo X (= modulo (Y,X) ; for short : Y mod X), where $2^{n-1} \leq X \leq 2^n-1$ and $0 \leq Y \leq 2^L-1$, has been published in "A new-modulo computation algorithm", D. Naccache, H. M'Silti, RAIRO-OR, (3) 1990. Value n denotes the length of X in bits and L represents the maximal size of Y accepted by the computation.

But in small cryptographical devices (e.g. smart-cards) RAM memory is not available in big quantities.

A special implementation of this computation allows an efficient calculation of such modulo functions. Thereby a RAM (12) size of only about three times the size of X is required for computing R = Y mod X. Also no divisions are required from a microcontroller or microprocessor (11) if X and a constant number K are stored on a retrievable medium, e.g. a ROM (13). Invention can be used for smart-cards.

Fig.1

The present invention relates to an apparatus and to a method for modulo computation.

Background

A method of computing Y modulo X (= modulo (Y,X); for short: Y mod X), where $2^{n-1} \leq X \leq 2^n - 1$ and $0 \leq Y \leq 2^L - 1$, has been published in "A new modulo computation algorithm", D. Naccache, H.M'Silti, RAIRO-OR, (3) 1990.

Value n denotes the length of X in bits and L represents the maximal size of Y accepted by the computation. This algorithm is hereafter referred to as Prince Leonard's Algorithm, PLA for short.

Invention

It is one object of the invention to disclose a method of fast modulo computation with reduced memory size. This object is reached by the inventive method disclosed in claim 3.

In principle the inventive method for modulo computation $A*B$ mod X comprizes the steps of:
- storing said numbers A and B in a first group of cells RAM1 and a second group of cells RAM2, respectively;
- performing a destructive multiplication $A*B = C$;
- transfering the data stored in said second group of cells RAM2 to said first group of cells RAM1;
- clearing said second group of cells RAM2;
- shifting the data stored in a third group of cells RAM3, denoted as $C_i$ where i is the bit number and i = 0 the LSB, three positions to right while introducing the three rightmost bits $C_{n-1}$, $C_n$ and $C_{n+1}$ to the leftmost positions (i.e. LSB's) of said third group of cells RAM3;
- multiplying destructively a second constant $K = 2^{2n}/X$, which is stored with a length of n + 1 bits in a retrievable medium, by the data stored in said third group of cells RAM3;
- pushing the rightmost bit stored in said second group of cells RAM2, denoted as $D_{n+1}$, to the leftmost position of said third group of cells RAM3;
- clearing said second group of cells RAM2;
- partial multiplying a first constant X, which is stored with a length of n bits in said retrievable medium, by the data stored in said third group of cells RAM3, whereby only n + 2 LSB are obtained in said second group of cells RAM2;
- subtracting RAM2 to RAM1 (say F = RAM1 - RAM2);
- while the number stored in said first group of cells RAM1 is greater than said first constant X, subtract said first constant X from the number stored in said first group of cells RAM1.

Thereby the numbers and/or data stored in the RAM matrix containing said three groups of cells and/or in said retrievable medium may be stored in an inverse format (MSB...LSB), the order of said first, second and/or third group of cells may be permuted and/or instead of clearing a respective group of said cells the respective group of cells may be overwritten successively.

Advantageous additional embodiments of the inventive method are resulting from the respective subclaims.

It is a further object of the invention to disclose an apparatus which utilizes the inventive method. This object is reached by the inventive apparatus disclosed in claim 1.

In principle the inventive apparatus for modulo computation $A*B$ mod X, where A, B and a first constant X are n byte-numbers, comprizes:
- a retrievable medium, e.g. a RAM, ROM or $E^2PROM$, having recorded therein said first constant X and a second constant $K = 2^{2n}/X$;
- a RAM matrix of size $3 * (int(n/8) + 1)$ byte which contains a first group of cells RAM1, a second group of cells RAM2 and a third group of cells RAM3;
- computation means allowing multidigit-subtractions, -shift operations, -data transfers to or from said retrievable medium and said RAM matrix, -complete and destructive multiplications of data stored in said RAM matrix.

Advantageous additional embodiments of the inventive apparatus are resulting from the respective subclaim.

Modern cryptogaphical communications often require modulo operations. In small cryptographical devices (e.g. smart-cards) where RAM memory is not available in big quantities, a special implementation of PLA allows an efficient computation of such modulo functions.

Thereby a RAM size of only about three times the size of X is required for computing R = Y mod X.

Also no divisions are required from a microcontroller or microprocessor if X and a constant number K are stored on a retrievable medium, e.g. a ROM.

Drawing

Preferred embodiments of the invention will now be described with reference to the accompanying drawing, in which:

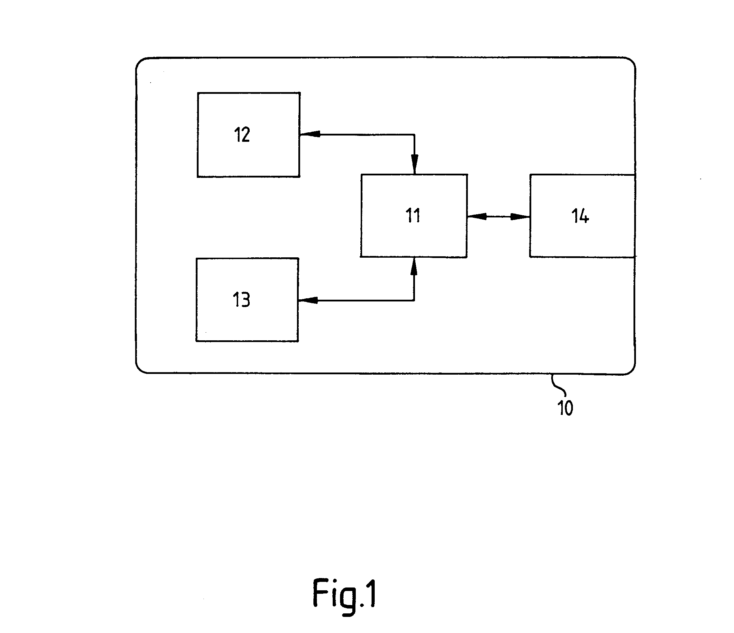

Fig. 1 shows a smart-card with computation circuits.

Preferred embodiments

In Fig. 1 a smart-card 10 is depicted which contains a microprocessor circuit 11. This microprocessor circuit is connected to a RAM memory circuit 12, a ROM memory circuit 13 and an I/O-interface circuit 14. Data and address numbers can be exchanged using the respective wires. A program for carrying out the PLA procedure in microprocessor circuit 11 is stored in ROM 13.

When the procedure is executed for the first time a constant K (depending on X and L) is computed and stored in RAM 12 for future recalls of the PLA with other Y values smaller than $2^L-1$.

RAM 12 and/or ROM 13 and/or I/O-interface circuit 14 may be included in microprocessor circuit 11. ROM 13 may also be an $E^2PROM$.

The computation of K requires one division, but in later jumps to the procedure only two multiplications, two right-shifts and at most three subtractions will be needed, provided that X remains unchanged.

The most common existing scheme to compute $R = Y \bmod X$ is:
$$R = Y - X * int(Y/X)$$
or in programming language C-like notation:

```
Unsigned common(Y,X)                          (program common)

Unsigned Y,X;

{

return(Y-X*(Y/X));

}
```

This computation method works on any couple of integers, but is often too lengthy since it requires a different division each time.

In an inventive device, e.g. a smart-card 10, for each X (only once) a constant value K is computed with microprocessor circuit 11 and stored in RAM 12. K will be re-used when modulo X is called with different Y values. When later carrying out the procedure advantageously a well defined interval can be used in which the computation is refined by few subtractions within microprocessor circuit 11. Such jumps to the procedure are easy to do since the distance is computed by shifts and multiplications.

If X is a constant which never changes during the device's life, advantageously K can be computed by the issuer of the smart-card 10 and stored in ROM 13.

All along this invention the minus operation will be considered as unsigned digit-to-digit (here bit-to-bit) subtraction, for instance: 10397 - 21033 = 89364, and the computation schemes are written in programming language C-like notation.

An inventive device works according to the following program to compute modulo functions:

```
Unsigned modulo(Y,X);                          (program modulo)

Unsigned Y,X;

{

   Static unsigned COPY_X,K;

   Unsigned A;

   if (COPY_X!=X) { K ← 2^L / (COPY_X ← X); }

   A ← X * ((K*(Y>>(n-1)))>>(L-n+1));

   A ← Y % 2^(n+2)-A % 2^(n+2);

   While (A ≥ X) {A ← A-X;}

   Return (A);

}
```

It should be pointed out that the while-loop is executed at most twice and that the operation $\% 2^{n+2}$ is simply a subtraction performed on the (n + 2) LSB's (Least Significant Bit) of Y and A.

This modulo (Y,X) function does also work well if the line:

$$A \leftarrow Y \% 2^{n+2}-A \% 2^{n+2};$$

is substituted by:

$$A \leftarrow Y-A;$$

>> denotes the Shift Right operator, % denotes the Shift Left operator.

It can be proved that the above statements are true:

Prior to the while-loop

$$((K(Y>>(n - 1))) >> (L - n + 1)) \text{ times } X$$

is subtracted from Y. Consequently

$$Y - X * ((K(Y>>(n - 1))) >> (L - n + 1)) \equiv R$$

or

$$Y - X * ((K(Y>>(n - 1))) >> (L - n + 1)) - X * \Delta = R$$

Evaluating $\Delta$ results in

$$Y - X * ((K(Y>>(n - 1))) >> (L - n + 1)) - X * \Delta = Y - X * int(Y/X)$$
$$X * ((K(Y>>(n - 1))) >> (L - n + 1)) + X * \Delta = X * int(Y/X)$$
$$((K(Y>>(n - 1))) >> (L - n + 1)) + \Delta = int(Y/X)$$

There exists

$$\alpha < X/int(Y/X) = Y/X - \alpha/X$$
$$((K(Y>>(n - 1))) >> (L - n + 1)) + \Delta = Y/X - \alpha/X$$

Similarly there exists

$$\beta < 2^{n - 1}/Y >> (n - 1) = Y/2^{n - 1} - \beta/2^{n - 1}$$

and

$$\gamma < X/K = 2^L/X - \gamma/X$$
$$\{(Y/2^{n - 1} - \beta/2^{n - 1}) * (2^L/X - \gamma/X)\} >> (L - n + 1) - Y/X + \alpha/X = -\Delta$$
$$\{Y/(X * 2^{n - 1 - L}) - \beta/(X * 2^{n - 1 - L}) - Y * \gamma/(X * 2^{n - 1}) + \gamma * \beta/(X * 2^{n - 1})\}>>(L - n + 1)Y/X + \alpha/X = -\Delta$$

and finally there exists

$$\varepsilon < 2^{L - n + 1}/\{Y/(X * 2^{n - 1 - L}) - \beta/(X * 2^{n - 1 - L}) - Y * \gamma/(X * 2^{n - 1}) + \gamma\beta/(X * 2^{n - 1})\} >> (L - n + 1) =$$
$$\{(Y/(X * 2^{n - 1 - L}) - \beta/(X * 2^{n - 1 - L}) - Y * \gamma/(X * 2^{n - 1}) + \gamma\beta/(X * 2^{n - 1})\}/2^{L - n + 1} - \varepsilon/2^{L - n + 1}$$

so that

$$\{Y/(X * 2^{n - 1 - L}) - \beta/(X * 2^{n - 1 - L}) - Y * \gamma/(X * 2^{n-1}) + \gamma\beta/(X * 2^{n - 1})\}/2^{L - n + 1} - \varepsilon/2^{L - n + 1} - Y/X + \alpha/X = -\Delta$$
$$Y/X - \beta/X - Y * \gamma/(X * 2^L) + \gamma\beta/(X * 2^L) - \varepsilon/2^{L - n + 1} - Y/X + \alpha/X = -\Delta$$
$$\beta/X + Y * \gamma/(X * 2^L) - \gamma\beta/(X * 2^L) + \varepsilon/2^{L - n + 1} - \alpha/X = \Delta$$
$$\Delta \leq \beta/X + Y * \gamma/(X * 2^L) + \varepsilon/2^{L - n + 1}$$
$$< \beta/X + Y/2^L + \varepsilon/2^{L - n + 1} < \beta/X + Y/2^L + 1$$

since $2^{n - 1} \leq X$ and $Y \leq 2^L - 1$ (see definitions in paragraph 'background'). Therefore $\Delta < 3$.

This proves that in the worst case the while loop will be executed twice.

As the length of X is n bits, 3 * X is at most n + 2 bits long. Consequently the subtraction

$$Y - X((K(Y>>(n - 1)))>>(L - n + 1))$$

can be done on the n + 2 LSB's of each number and the line
$$A \leftarrow Y-A;$$
can be replaced by the line
$$A \leftarrow Y \% 2^{n+2}-A \% 2^{n+2}.$$

Two examples will explain the computations:
Compute
$$R = 48619 \bmod 93 \ (\equiv 73)$$
and
$$S = 47711 \bmod 93 \ (\equiv 2).$$

```
R = ?
Let L = 17
X = (93)₁₀        = 1011101        --> n = 7
K = 2ᴸ/X          = 10110000001
```

```
Y = (48619)₁₀              = 1011110111101011
Y>>(n-1)                   = 1011110111    (n-1 LSB's suppressed)
K*(Y>>(n-1))               = 10110000001*1011110111
                           = 10000010100010111011l
(K*(Y>>(n-1)))>>(L-n+1)               = 1000001010
X*(K*(Y>>(n-1)))>>(L-n+1)             = 1011110110100010
X*(K*(Y>>(n-1)))>>(L-n+1)%2^(n+2)     = 110100010
Y%2^(n+2)                             = 111101011
```

$$
\begin{array}{r}
111101011 \\
- 110100010 \\
\hline
= 1001001 = (73)_{10} = R
\end{array}
$$

```
S = ?
Let L = 17
X = (93)₁₀    = 1011101              --> n = 7
K = 2^L/X          = 10110000001
Y = (47711)₁₀      = 1011101001011111
Y>>(n-1)           = 1011101001    (n-1 LSB's suppressed)
K*(Y>>(n-1))       = 10110000001*1011101001
                   = 10000000001000110l001
(K*(Y>>(n-1)))>>(L-n+1)               = 1000000000
X*(K*(Y>>(n-1)))>>(L-n+1)             = 1011101000000000
X*(K*(Y>>(n-1)))>>(L-n+1)%2^(n+2)     = 000000000
Y%2^(n+2)                             = 001011111
```

$$
\begin{array}{r}
001011111 \\
- 000000000 \\
\hline
1011111 \quad (\text{While loop}) \\
- 1011101 \\
\hline
= 10 = (2)_{10} = S
\end{array}
$$

The theoretical gap between the computation times of program 'common' (one division, one multiplication and one subtraction) and program 'modulo' (two multiplications, two shift right operations, two shift left operations, three subtractions and a division in the first activation) can be estimated (for n-bit numbers):

The instructions '>>n' and '% n' are done in n clock cycles each.

A - B and A + B take about $2*n$, $A*B$ is of $2*n^2$ and a division is generally admitted to be equivalent to four multiplications. If by $C_n(k)$ the time required to execute k programs 'common' on n-bit numbers is denoted and

by $M_n(k)$ the similar time for program 'modulo', then

$$C_n(k) = k * (4 * (2 * n^2) + 2 * n^2 + 2 * n) = k * (10 * n^2 + 2 * n);$$

$$M_n(k) = 4 * (2 * n^2) + k * (2 * (2 * n^2) + 2 * n + 2 * n + 3 * (2 * n)) = 8 * n^2 + k * (4 * (n^2) + 10 * n).$$

For $n = 10$: $C_{10}(k) = k * 1020$ and $M_{10}(k) = 800 + k * 500$

this results to

$$C_{10}(1) < C_{10}(1),$$

but for any $k > 1$

$$M_{10}(k) < C_{10}(k).$$

This points out that in case of repeated modulo computations the inventive kind of modulo computation is faster.

The inventive modulo computation can be improved even more. It can be proved that for all $u < L$

$$int(int(2^L/X)/2^u) = int(2^{L - u}/X).$$

This can be applied for rewriting program 'modulo' under an improved form:

```
Unsigned modulo_1(Y,X);                           (program modulo_1)
Unsigned Y,X;
{
  Static unsigned int COPY_X,K;
  Unsigned int A,Z,1;



      if (COPY_X!=X) { K ← 2^L / (COPY_X ← X); }
      1 ← Number_of_digits(Y);
      Z ← K >> (L-1-1);
      A ← X * ((Z*(Y>>(n-1)))>>(1-n+2));
      A ← Y % 2^(n+2)-A % 2^(n+2);
      While (A ≥ X) {A ← A-X;}
      Return (A);
  }
```

To illustrate the difference with program 'modulo' the following example is computed:

$T = 1000 \ modulo\_1 \ 93 \ (\equiv 70)$

$T = ?$

Let $Y = (1000)_{10}$　　$= 1111101000$　　　　$--> \ l = 10$

$Y>>(n-1)$　　　　　　$= 1111$

$Z = K>>(L-l-1)$　　　$= 10110000001>>(17-10-1)_{10} = 10110$

$Z*(Y>>(n-1))$　　　　$= 10110*1111$　　$= 101001010$

$(Z*(Y>>(n-1)))>>(l-n+2) = 1010$

$X*((Z*(Y>>(n-1)))>>(l-n+2))$　　　　　$= 1110100010$

$X*((Z*(Y>>(n-1)))>>(l-n+2))\%2^{n+2}$　　$= 110100010$

$Y\%2^{n+2}$　　　　　　$= 111101000$

$$
\begin{array}{r}
111101000 \\
- \ 110100010 \\
\hline
\end{array}
$$

$$1000110 = (70)_{10} = T.$$

The according computation with program 'modulo':

$K*(Y>>(n-1))$　　　　　$= 10110000001*1111$

　　　　　　　　　　　　$= 101001010001111$

$(K*(Y>>(n-1)))>>(L-n+1) = 1010$

$X*((K*(Y>>(n-1)))>>(L-n+1))$　　　$= 1110100010$

$X*((K*(Y>>(n-1)))>>(L-n+1))\%2^{n+2}$　$= 110100010$

$Y \% 2^{n+2} = 111101000$

$$
\begin{array}{r}
111101000 \\
- \ 110100010 \\
\hline
\end{array}
$$

$$11000110 = (70)_{10} = T.$$

Now for the practical case $L = 2*n$ the inventive modulo computation is described in more detail. Program 'modulo' changes to:

```
Unsigned modulo_2n(Y,X);                    (program modulo_2n)
Unsigned Y,X;
{
  Static unsigned COPY_X,K;
  Unsigned A;
  if (COPY_X!=X) { K ← 2^(2*n) / (COPY_X ← X); }
  A ← X * ((K*(Y>>(n-1)))>>(n+1));
  A ← Y % 2^(n+2) - A % 2^(n+2);
  While (A ≥ X) {A ← A-X;}
  Return (A);
}
```

When calculating according to the invention a special kind of multiplication, called destructive multiplication, is used. A destructive multiplication is a multiplication process in which the result C (product of A ∗ B) is created while destroying A for gaining place in RAM 12.

To illustrate this computation the product 911∗163 = 148493 is calculated (bold digits are involved in actual computation):

```
    911         911         911
   *163        *163        *162
   ----        ----        ----
    003         033         733
```

The last multiplication 3∗9 has the result 27. The digit 7 of 27 is the first digit of 733 and the digit 2 of 27 is the last digit of 162. Digit 3 of 163 will not be needed further and is replaced by digit 2 of result 27.

```
    911         911         911
   *162        *163        *157
   ----        ----        ----
    793         393         393
```

The first multiplication 6 ∗ 1 has the result 6 which is added to the medium digit of 733 - > 793. The second multiplication 6 ∗ 1 has the result 6 which is added to the first digit 7 of 793. This results in the number 393 and in the last digit 3 ( = 2 + 1) of number 163. The last multiplication 5 ∗ 9 has the result 54. The second digit of this result is added to the last digit 3 of number 163. The second digit 6 of 163 will not be needed further and is replaced by digit 5 of result 54.

```
    911         911         911
   *157        *158        *148
   ----        ----        ----
    493         493         493
```

The last multiplication 1 ∗ 9 has the result 9. This result is added to the second digit 5 of number 158. The first digit 1 of 158 will not be needed further and is replaced by the first digit 1 of the sum 5 + 9 = 14. Now number 148 represents the first three digits of the final result 148493 and number 493 represents the last three digits.

The values X and K are both stored in ROM 13. The necessary RAM space within RAM 12 is a $3 * (int(n/8) + 1)$ bytes matrix (e.g. if $n = 38$ then the matrix size is $5 * 3$). The numbers $A_i...F_i$ are multibyte numbers, where $i$ is the bit number and $i = 0$ the LSB.

$$\longleftarrow\text{-------- } int(n/8)+1 \text{ --------}\longrightarrow$$

```
RAM1    ..............................   ↑
RAM2    ..............................   |  3
RAM3    ..............................   ↓
```

At the beginning A and B are stored in RAM1 and RAM2, resp.:

RAM1 $\quad A_0A_1A_2A_3 \cdots \cdots \cdots A_{n-2}A_{n-1}00$

RAM2 $\quad B_0B_1B_2B_3 \cdots \cdots \cdots B_{n-2}B_{n-1}00$

RAM3 $\quad .............................$

After performing the destructive multiplication of $A * B = C$:

RAM1 $\quad A_0A_1A_2A_3 \cdots \cdots \cdots A_{n-2}A_{n-1}00$

RAM2 $\quad C_0C_1C_2 \cdots \cdots \cdots C_{n-1}C_nC_{n+1}$

RAM3 $\quad C_{n+2}C_{n+3}C_{n+4} \cdots \cdots C_{2n-1}0000$

Transfer RAM2 to RAM1 and clear RAM2:

RAM1 $\quad C_0C_1C_2 \cdots \cdots \cdots C_{n-1}C_nC_{n+1}$

RAM2 $\quad 00000000000000000000000000000000$

RAM3 $\quad C_{n+2}C_{n+3}C_{n+4} \cdots \cdots C_{2n-1}0000$

Shift RAM3 three positions to right while introducing bits $C_{n-1}$ to $C_{n+1}$ to the leftmost positions of RAM3:

RAM1 $\quad C_0C_1C_2 \cdots \cdots \cdots C_{n-1}C_nC_{n+1}$

RAM2 $\quad 00000000000000000000000000000000$

RAM3 $\quad C_{n-1}C_nC_{n+1}C_{n+2}C_{n+3} \cdots \cdots C_{2n-1}0$

Multiply destructively K (length $n + 1$ in ROM) by RAM3 (say $D = K * RAM3$):

RAM1 $\quad C_0C_1C_2 \cdots \cdots \cdots C_{n-1}C_nC_{n+1}$

RAM2 $\quad D_0D_1D_2 \cdots \cdots \cdots \cdots D_nD_{n+1}$

RAM3 $\quad D_{n+2}D_{n+3}D_{n+4} \cdots \cdots \cdots D_{2n}00$

Push $D_{n+1}$ to the leftmost position of RAM3 and set RAM2 to 0:

$$\text{RAM1} \quad C_0 C_1 C_2 \ldots\ldots\ldots\ldots\ldots C_{n-1} C_n C_{n+1}$$
$$\text{RAM2} \quad 00000000000000000000000000000000$$
$$\text{RAM3} \quad D_{n+1} D_{n+2} D_{n+3} \ldots\ldots\ldots\ldots D_{2n} 0$$

Multiply X (length n stored in ROM 13) by RAM3 (say E = RAM3 $*$ X). Perform only a partial multiplication in order to obtain in RAM2 only the n + 2 LSB of E:

$$\text{RAM1} \quad C_0 C_1 C_2 \ldots\ldots\ldots\ldots C_{n-1} C_n C_{n+1}$$
$$\text{RAM2} \quad E_0 E_1 E_2 \ldots\ldots\ldots\ldots E_{n-1} E_n E_{n+1}$$

Subtract RAM2 to RAM1 (say F = RAM1 - RAM2):

$$\text{RAM1} \quad F_0 F_1 F_2 \ldots\ldots\ldots\ldots F_{n-1} F_n F_{n+1}$$
$$\text{RAM2} \quad E_0 E_1 E_2 \ldots\ldots\ldots\ldots E_{n-1} E_n E_{n+1}$$

While RAM1 > X subtract X (length n in ROM) from RAM1:

$$\text{RAM1} \quad \text{FINAL.RESULT} \ldots\ldots\ldots\ldots\ldots$$
$$\text{RAM2} \quad E_0 E_1 E_2 \ldots\ldots\ldots\ldots E_{n-1} E_n E_{n+1}$$

Advantageously the inventive apparatus terminates in a position which is very favourable to perform another destructive multiplication (Put the next number in RAM2 and NEXT_NUMBER$*$FINAL_RESULT will appear in RAM2 and RAM3). This can be very useful for modular exponentiation.

Above the case L = 2n (the most practical) is described, but the method can be easily generalized to any value of L > n.

The numbers and/or data stored in the RAM matrix and/or in the retrievable medium 13 can also be stored in an inverse format (MSB and LSB exchanged).

The order of RAM1, RAM2 and/or RAM3 may be permuted.

Instead of clearing a RAM this RAM can be overwritten successively.

The multiplications may be driven by a square-and-multiply algorithmic controller.

The RAM matrix can be replaced by right-shift registers.

## Claims

1. Apparatus for modulo computation A $*$ B mod X, where numbers A, B and a first constant X are n byte-numbers, comprizing:
   - a retrievable medium (13), e.g. a RAM, ROM or E$^2$PROM, having recorded therein said first constant X and a second constant K = $2^{2n}/X$;
   - a RAM matrix of size 3 $*$ (int(n/8) + 1) byte which contains a first group of cells RAM1, a second group of cells RAM2 and a third group of cells RAM3;
   - computation means (11) allowing multidigit-subtractions, -shift operations, -data transfers to or from said retrievable medium and said RAM matrix, -complete and destructive multiplications of data stored in said RAM matrix.

2. Apparatus according to claim 1, **characterized in** that computations with said computation means (11) are performed with binary or trinary numbers.

3. Method for modulo computation A$*$B mod X utilizing an apparatus according to claim 1 or 2, comprizing the steps of:

- storing said numbers A and B in said first group of cells RAM1 and said second group of cells RAM2, respectively;
- performing a destructive multiplication $A * B = C$;
- transfering the data stored in said second group of cells RAM2 (the LSB's of C) to said first group of cells RAM1;
- clearing said second group of cells RAM2;
- shifting the data stored in said third group of cells RAM3 (the MSB's of C), denoted as $C_i$ where i is the bit number and i=0 the LSB, three positions to right while introducing the three rightmost bits $C_{n-1}$, $C_n$ and $C_{n+1}$ to the leftmost positions (i.e. LSB's) of said third group of cells RAM3;
- multiplying destructively said second constant K, which is stored with a length of n + 1 bits in said retrievable medium (13), by the data stored in said third group of cells RAM3;
- pushing the rightmost bit stored in said second group of cells RAM2, denoted as $D_{n+1}$, to the leftmost position of said third group of cells RAM3;
- clearing said second group of cells RAM2;
- partial multiplying said first constant X, which is stored with a length of n bits in said retrievable medium (13), by the data stored in said third group of cells RAM3, whereby only n + 2 LSB are obtained in said second group of cells RAM2;
- subtracting the number stored in said second group of cells RAM2 from the number stored in said first group of cells RAM1;
- while the number stored in said first group of cells RAM1 is greater than said first constant X subtract said first constant X from the number stored in said first group of cells RAM1.

4. Method according to claim 3, **characterized in** that the numbers and/or data stored in said RAM matrix and/or in said retrievable medium (13) are stored in an inverse format (MSB...LSB).

5. Method according to claim 3 or 4, **characterized in** that the order of said first, second and/or third group of cells is permuted.

6. Method according to any of claims 3 to 5, **characterized in** that instead of clearing a respective group of said cells the respective group of cells is overwritten successively.

7. Method according to any of claims 3 to 6, **characterized in** that said multiplications are driven by a square-and-multiply algorithmic controller.

8. Method according to any of claims 3 to 7, **characterized in** that said RAM matrix is replaced by right-shift registers.

Fig.1

**European Patent Office**

# EUROPEAN SEARCH REPORT

Application Number

EP 92 10 8450

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | RECHERCHE OPERATIONNELLE/OPERATIONS RESEARCH vol. 24, no. 3, 1990, pages 307 - 313; NACCACHE DE PAZ ET AL: 'A new modulo computation algorithm' | | G06F7/72 |
| A | EP-A-0 308 963 (KK TOSHIBA) | | |

TECHNICAL FIELDS SEARCHED (Int. Cl.5 )

G06F
G07F

The present search report has been drawn up for all claims

| Place of search | Date of completion of the search | Examiner |
|---|---|---|
| THE HAGUE | 09 SEPTEMBER 1992 | BEINDORFF W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)